# EUROPÄISCHE PATENTANMELDUNG

(11) **EP 2 241 200 A1**
(43) Veröffentlichungstag der Anmeldung: **20.10.2010**
(21) Anmeldenummer: 09158126.4
(22) Anmeldetag: 17.04.2009
(51) Int. Cl.: A23L 2/44

(54) **Neues Verfahren zur Abfüllung von Getränken mit Dialkyldicarbonaten**

(71) Anmelder: LANXESS Deutschland GmbH, 51369 Leverkusen (DE)
(72) Erfinder: Vogl, Erasmus, Dr., 51373 Leverkusen, (DE)

(57) **Zusammenfassung**

Verfahren zur Herstellung von mikrobiell stabilisierten Getrânken dadurch gekennzeichnet, dass man Dialkyldicarbonat, insbesondere Dimethyldicarbonat, dem Getränk bei einer Temperatur von mehr als 30 °C, insbesondere bei 30,5 bis 40°C zugibt, und auch ein Verfahren zur Herstellung von mikrobiell stabilisierten Getränken, dadurch gekennzeichnet, dass man
a) vor der Abfüllung des Getränkes in ein Getränkegebinde bei einer Temperatur von 0 bis 35°C Dialkyldicarbonat zum Getränk zugibt,
b) das nach a) erhaltene Getränk in ein Getränkegebinde abfüllt und
c) nach dem Verschließen des abgefüllten Getränkegebindes die Temperatur des gefüllten Getränkegebindes auf eine Temperatur von 20°C bis 40°C, mindestens jedoch um 3 °C gegenüber der Temperatur in Schritt a) erhöht.

## Beschreibung

Die Erfindung betrifft ein neues Verfahren zur mikrobiellen Stabilisierung (Entkeimung) von Getränken unter Verwendung von Dialkyldicarbonaten.

Dialkyldicarbonate werden in der Getränkeindustrie zur Kaltentkeimung von alkoholfreien karbonisierten oder stillen Fruchtsaftgetränken, Fruchtsäften, Weinen, alkoholfreien Weinen, Ciders, EisTees und anderen Getränken eingesetzt. Diese Technologie der Getränkestabilisierung hat eine Reihe von Vorteilen. Der herausragende Vorteil liegt dabei in der Tatsache begründet, dass Geschmack und Farbe im Gegensatz zur Heißabfüllung nicht beeinflusst werden. Auch gegenüber persistenten Konservierungsstoffen wie Benzoat bzw. Benzoesäure oder Sorbat bzw. Sorbinsäure besteht der Vorteil insbesondere in der Abwesenheit jeglicher geschmacklicher Beeinträchtigungen. Gegenüber einer kaltaseptischen Abfüllung sind besonders die ganz wesentlich geringeren Investitionskosten in Anlagentechnik als Vorteil beim Einsatz von Dialkyldicarbonaten bekannt.

Die Substanzklasse der Dialkyldicarbonate hat die besondere Eigenschaft, in Kontakt mit entsprechenden (wässrigen) Getränken in die abgeleiteten Alkohole und Kohlendioxid zu hydrolysieren. In Abhängigkeit von der Temperatur der Getränke während der Anwendung ist deshalb schon nach relativ kurzer Zeit die eigentlich aktive Substanz nicht mehr im Getränk vorhanden. Bei den üblichen Temperaturen der Kaltabfüllung von Getränken zwischen 0 und 25 °C ist dies nach einigen Stunden der Fall. Die Wirkung von Dialkyldicarbonaten durch verschiedene Methoden oder Kombinationen zu verbessern ist bereits in der Patentliteratur vielfach beschrieben wie bspw. in DE-A-4434314, US-A-5738888, WO 200187096 oder US-A-2001046538.

Man geht davon aus, dass Dialkyldicarbonate, um ihre Wirkung zu entfalten zunächst in die Mikroorganismen-Zelle eindiffundieren und durch Reaktion mit Enzymen eine Inaktivierung der Enzyme bewirken. Dadurch wird die Funktion der Organe der Mikroorganismen soweit gestört oder herabgesetzt dass es zum Absterben kommt.

Die bei der Kaltabfüllung mit Dialkyldicarbonaten angewandten Abfüllemperaturen zwischen 0 und 25 °C haben jedoch einen entscheidenden Nachteil: In tropischen Regionen sowie in gemässigten Breiten im Sommer, beträgt die Aussentemperatur in den Abfüllhallen leicht >30°C. Dadurch kommt es nach dem Verschließen der Gebinde schnell zur Bildung von Kondenswasser auf der Aussenseite der vergleichsweise kühlen Gebinde. Dies wiederum ist unerwünscht, denn Etiketten werden dadurch abgelöst, haften erst gar nicht, oder werden verformt. Auch kann das sich sammelnde Wasser die Verpackungskartons aufweichen oder die Paletten durchnässen. Weiterhin kann durch die so eingebrachte Feuchtigkeit in den Verpackungseinheiten in der nachfolgenden Transport- und Lagerungszeit ein Wachstum von Mikroben wie Schimmelpilzen, Hefen oder Bakterien auf den Etiketten und Verpackungsmaterialien stattfinden.

Aus US-A-5738888 (siehe Spalte 4, Zeile 27 - 53) ist bereits bekannt, dass Dimethyldicarbonat (DMDC) thermisch destabil ist und dass daher davon abgeraten wird DMDC bei Temperaturen von größer als 30°C einzusetzen.

Somit können bei einer Kaltabfüllung mit Dialkyldicarbonaten nicht wesentlich höhere Abfülltemperaturen als 20-25°C verwendet werden. Außerdem ist es bei der Kaltabfüllung dann nicht mehr kühl genug und damit von mikrobiologischen Vermehrungsprozessen im Getränk bedroht, zumal die Getränke üblicherweise nicht vollkommen steril sind.

Es wurde nun ein neues Verfahren gefunden, mit dem die oben beschriebenen Probleme gelöst werden können. Überraschenderweise wurde dabei gefunden dass damit auch die antimikrobielle Wirksamkeit von Dialkyldicarbonaten noch wesentlich verbessert werden kann.

Die Erfindung betrifft daher ein Verfahren zur Herstellung von mikrobiell stabilisierten Getränken, das dadurch gekennzeichnet ist, dass man Dialkyldicarbonat dem Getränk bei einer Temperatur größer oder gleich 30 °C, vorzugsweise größer 30 °C, insbesondere bei 30,5 bis 40°C, besonders bevorzugt bei 31 bis 35 °C zugibt.

Bevorzugt handelt es sich bei den Dialkyldicarbonaten um Verbindungen der allgemeinen Formel (I) 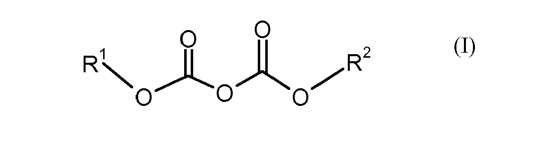 worin
- R¹ und R²: unabhängig voneinander für geradkettiges oder verzweigtes C₁-C₈-Alkyl, Cycloalkyl, C₂-C₈-Alkenyl, C₂-C₈-Alkinyl oder Benzyl stehen,
welches jeweils gegebenenfalls ein- bis mehrfach, gleich oder verschieden substi- tuiert ist durch Halogen; Nitro; Cyano; C₁-C₆-Alkoxy; Dialkylamino; oder für Phe- nyl stehen, welches gegebenenfalls ein bis mehrfach, gleich oder verschieden sub- stituiert ist durch Halogen; Nitro; Cyano; Alkyl; Halogenalkyl; Alkoxy; Halo- genalkoxy; Acyl; Acyloxy; Alkoxycarbonyl; Carboxyl,
bevorzugt
- R¹ und R²: unabhängig voneinander für geradkettiges oder verzweigtes C₁-C₈-Alkyl, C₂-C₈- Alkenyl oder Benzyl stehen,
besonders bevorzugt
- R¹ und R²: unabhängig voneinander für geradkettiges oder verzweigtes C₁-C₅-Alkyl, C₃-Alkenyl oder Benzyl stehen,
und ganz besonders bevorzugt
- R¹ und R²: unabhängig voneinander für Methyl, Ethyl, Isopropyl, tert.-Butyl, tert.-Amyl, Allyl oder Benzyl stehen.

Besonders bevorzugt wird als Dialkyldicarbonat Dimethyldicarbonat oder Diethylcicarbonat, insbesondere Dimethyldicarbonat (DMDC) eingesetzt.

Das Dialkyldicarbonat wird vorzugsweise in einer Menge von 1 bis 300 ppm, insbesondere von 10 bis 250 ppm, bezogen auf das Getränk zugesetzt.

Bei den zu stabilisierenden Getränken handelt es sich vorzugsweise um Tee-basierte Getränke, einschließlich grünem Tee, schwarzem Tee sowie anderen Tee-Sorten, sowie um sauer eingestellte Getränke mit einem pH ≤ 4.2, karbonisierte und nicht-carbonisierte alkoholfreie Erfrischungsgetränke, Fruchtsäfte, Fruchtnektare, Fruchsaft-haltige Getränke, Weine, alkoholfreie Getränke, Ciders, Eistees, alkoholische Mischgetränke, aromatisierte Wässer oder Sportgetränke.

Bevorzugt wird das Dialkyldicarbonat in Gegenwart von, insbesondere zusammen mit einer Phosphorverbindung zugegeben.

Bei den Phosphor-Verbindungen handelt es sich bevorzugt um Verbindungen des Phosphors mit Sauerstoff, wobei vorzugsweise mindestens eine Phosphor-Sauerstoff-Bindung enthalten ist, besonders bevorzugt um Verbindungen aus der Reihe der Phosphoroxide und der Phosphor-Sauerstoff-Säuren und deren Derivate.

Ganz besonders bevorzugte Phosphor-Verbindungen sind Phosphorpentoxid (P₂O₅), Hypophosphorige Säure (H₃PO₂), Phosphorige Säure (H₃PO₃), wässrige oder kristalline Phosphorsäure (H₃PO₄), Pyrophosphorsäure, Metaphosphorsäure, Polyphosphorsäuren, Dimethylphosphat, Trimethylphosphat, Phosphate wie Natriumhydrogenphosphate oder Ammoniumhydrogenphosphate, Oleylphosphat, Phytinsäure, Phosphorylcholin, Adenosin-3'-monophosphorsäure, 2-Phosphonobutane-1,2,4-tricarbonsäure, Amino-trismethylen-phosphonsäure, Diethylenetriaminpentamethylen-phosphonsäure oder Phosphonsäuregruppen-haltige Ionentauscher, wie sie z.B. bekannt sind aus WO 2000001458 oder aus EP-A 355007.

Die genannten Phosphor-Verbindungen werden im allgemeinen in einer Menge von 0.01 bis 100.000 ppm, bevorzugt in einer Menge von 0,1 bis 10 000 ppm, besonders bevorzugt in einer Menge von 0.1 bis 3000 ppm, ganz besonders bevorzugt in einer Menge von 0,1 bis 2000 ppm bezogen auf den Dialkyldicarbonat oder deren Gemisch eingesetzt.

Bevorzugt wird das Dialkyldicarbonat als Zusatz, enthaltend mehr als 95Gew.-%, insbesondere mehr als 98 Gew.-% Dialkyldicarbonat, besonders bevorzugt mehr als 99 Gew,-% dem Getränk zugegeben, wobei vorzugsweise der Anteil an Wasser und organischem Lösungsmittel kleiner als 0,5 Gew.-%, vorzugsweise kleiner als 0,1 Gew.-% ist.

Mitverwendet werden können auch andere antimikrobiell wirkenden Stoffe, wie bspw. Benzoesäure, Benzoate, Sorbinsäure, Sorbate, Propionsäure, Natamycin, Nisin, Schwefeldioxid, EDTA oder auch Lysozym.

Die Zugabe der Dialkyldicarbonate, insbesondere von Dimethyldicarbonat erfolgt üblicherweise in flüssiger Form, portionsweise oder kontinuierlich in das Getränk. Bevorzugt ist es, dass die Zugabe von Dialkyldicarbonat mittels einer Düse, insbesondere mit einem Druck von 0,1 bis 40bar, vorzugsweise von 05 bis 40 bar, insbesondere 0,5 bis 15 bar gegenüber dem Getränkedruck erfolgt. Insbesondere DMDC wird bevorzugt mittels einer Dosierpumpe über eine beheizter Düse, in den Getränkestrom verdüst. Verbesserungen entsprechender Pumpen wurden in der Patenliteratur beschrieben beispielsweise in der DE 2910328 oder in der DE 2930765. Verbesserungen der Düse bzw. der davor liegenden Mischkammer wurden beispielsweise in der DE 1557043 beschrieben. Entsprechende Dosiervorrichtungen bestehen üblicherweise aus Vorratsgefäßen, elektromagnetisch betriebener Dosierpumpe, Eindüsungsbereich und einem elektronisch gekoppelten induktivem Durchflussmessgerät, sowie selbstverständlich Ansaugvorrichtungen, Belüftung bzw. Temperierung, Verbindungen, Ventilen, Sensoren etc. samt verbindenden und steuernden Elektronikelementen. Die Dosierleistungen der Pumpen betragen üblicherweise 0.1 bis 20 Litern DMDC pro Stunde.

Das erfindungsgemäße Verfahren führt zu mirkobiell stabilisierten Getränken, die bei gleichem Mengeneinsatz eine erhöhte Wirksamkeit gegenüber Mirkoorganismen, insbesondere Bakterien, Hefen und Pilzen oder eine gleichgute Wirksamkeit bei verringerter Menge des Wirkstoffes oder bei einer höheren Anfangsverkeimung des Getränkes aufweisen. Zudem wird die Kondensationsproblematik und die damit verbundenen Probleme einer kalten Abfüllung bei dem erfindungsgemäßen Verfahren vermieden.

Die Kondensationsproblematik kann insbesondere auch vermieden werden durch das folgende Verfahren, das ebenfalls Gegenstand der vorliegenden Erfindung ist.

Die Erfindung betrifft daher auch ein Verfahren zur Herstellung von mikrobiell stabilisierten Getränken, **dadurch gekennzeichnet, dass** man
a) vor der Abfüllung des Getränkes in ein Getränkegebinde bei einer Temperatur von 0 bis 35°C Dialkyldicarbonat zum Getränk zugibt,
b) das nach a) erhaltene Getränk in ein Getränkegebinde abfüllt und
c) nach dem Verschließen des abgefüllten Getränkegebindes die Temperatur des gefüllten Getränkegebindes auf eine Temperatur von 20°C bis 40°C, mindestens jedoch um 3 °C gegenüber der Temperatur in Schritt a) erhöht.

Bevorzugt bedeutet der Begriff "vor der Abfüllung" 30 oder weniger Minuten vor der Abfüllung.

Im Hinblick auf die Begriffe Getränk, Dialkyldicarbonat sowie mögliche Zusätze und Verfahrensweisen gelten die bevorzugten Ausführungsformen wie sie bereits oben angegeben sind.

In einer bevorzugten Ausführungsform dieses Verfahrens wird als Dialkyldicarbonat das das Dimethyldicarbonat (DMDC) oder das Diethyldicarbonat, insbesondere Dimethyldicarbonat eingesetzt.

Ebenfalls bevorzugt ist es, bei dem Verfahren das Dialkyldicarbonat, insbesondere das Dimethyldicarbonat in einer Menge von 10-250 ppm zuzugeben.

Durch das so verbesserte Verfahren wird die Kondensation von Feuchtigkeit auf den Aussenwänden der Gebinde vermieden. Dazu wird üblicherweise die Temperatur der Gebinde bis kurz über den Taupunkt gebracht. Der Taupunkt ist abhängig von Luftfeuchtigkeit und Temperatur der Umgebung.

Zur Zugabe von Dialkyldicarbonaten wird üblicherweise das Dialkyldicarbonat in flüssiger Form portionsweise oder kontinuierlich in das Getränk eingebracht. Das Getränk besitzt dabei eine Temperatur von vorzugsweise -5 bis 30 °C, besonders bevorzugt von 0 bis 25 °C, insbesondere von 5 bis 22 °C.

Nach Verschließen der Gebinde werden die Gebinde im Sinne dieser Verfahrensalternative vorzugsweise leicht erwärmt. Die Erhöhung der Temperatur kann beispielsweise mit einer Tunnelpasteur-Anlage erreicht werden. Hier werden die Gebinde von entsprechend temperiertem Wasser für eine gewisse Zeit kontinuierlich oder diskontinuierlich berieselt. Auch andere Verfahren die Gebinde nach dem Verschließen zu temperieren sind anwendbar.

Die Temperierung entsprechend Schritt c) des erfindungsgemäßen Verfahrens dauert üblicherweise 2 bis 30 min.

Nach Temperierung werden die befüllten Gebinde üblicherweise etikettiert und verpackt. Die nach diesem Verfahren erhaltenen Gebinde weisen keine Kondensation von Feuchtigkeit mehr auf.

Überraschenderweise ist die mikrobiologische Wirkung von Dialkyldicarbonaten bei diesem neuen Verfahren, verglichen mit nicht zusätzlich temperiert abgefüllten Gebinden, wesentlich erhöht. Dies bringt eine Reihe von herausragenden Vorteilen mit sich:
a) Die Menge an Dialkyldicarbonat kann reduziert werden.
b) Die mikrobiologische Sicherheit der Abfüllung erhöht sich.
c) Durch die höhere antimikrobielle Wirksamkeit kann eine höhere Grundbelastung der Getränke mit Mikroben in Kauf genommen werden, d.h. etwas geringere Pasteurisationseinheiten während der Pasteurisierung, somit geringere Temperaturbelastung der Getränkearomen.
d) Der Aufwand zur Reinigung der Anlage kann verringert werden.

### Beispiele:

**Beispiel 1:** Ein sterilfiltrierter Apfelsaft, 1:1 mit Wasser verdünnt, wurde auf unterschiedliche Temperaturen temperiert (Tabelle), danach mit jeweils der gleichen Menge (ca. 350 000) Keimen/ml von Saccharomyces cerevisiae versetzt, und anschließend sofort 0 oder 50 ppm Dimethyldicarbonat zugemischt.

Die Proben wurden 24 h bei den angegeben Temperaturen gelagert und anschließend eine Keimzahlbestimmung durch fortlaufende 1:10-Verdünnung und Auszählung auf Petrischalen durchgeführt (Agar CM59). Die Ergebnisse sind der Tabelle zu entnehmen Tabelle

| **Prüfkeim** | ***S. cerevisiae*** | | | |
|---|---|---|---|---|
| **Keimeinsaat** | **350.000 Keime / mL** | | | |
| **Verdünnung** | 10⁻¹ | 10⁻² | 10⁻³ | 10⁻⁴ |
| **Wirkstoff Konzentration** | **20°C** | | | |
| 0 ppm DMDC | +/+ | +/+ | +/+ | ∼700/∼870 |
| | +/+ | +/+ | +/+ | ∼880/∼1800 |
| 50 ppm DMDC | +/+ | ∼580/∼1000 | 99/103 | 10/22 |
| | +/+ | ∼850/∼800 | 112/128 | 8/16 |
| **Wirkstoff Konzentration** | **26°C** | | | |
| 0 DMDC ppm | +/+ | +/+ | +/+ | ∼1500/∼1900 |
| | +/+ | +/+ | +/+ | ∼2000/∼1700 |
| 50 ppm DMDC | +/+ | ∼480/∼560 | 63/77 | 16/11 |
| | +/+ | ∼1100/~540 | 68/72 | 13/9 |
| **Wirkstoff Konzentration** | **30°C** | | | |
| 0 ppm DMDC | +/+ | +/+ | Ca. 20000/+ | ∼2400/∼2200 |
| | +/+ | +/+ | +/+ | ∼1800/∼1600 |
| 50 ppm DMDC | +/+ | ∼380/∼360 | 47/54 | 8/15 |
| | +/+ | ∼360/∼380 | 57/46 | 5/9 |
| **Wirkstoff Konzentration** | **36°C** | | | |
| 0 ppm DMDC | +/+ | +/+ | Ca. 20000/+ | ∼1400/∼2100 |
| | +/+ | +/+ | +/+ | ∼1800/∼2600 |
| 50 ppm DMDC | ∼483/∼460 | 41/44 | 3/2 | -/2 |
| | ∼475/∼500 | 93/58 | -/6 | -/- |
| Einheiten | **Koloniebildende Einheiten pro 1 mL untersuchte Getränkeprobe** | | | |

| | | | | |
|---|---|---|---|---|
| - = Keine Mikroben + = ≥ 300 KBE / cfu "Zahl" = Anzahl sichtbarer KBE / cfu sichtbar | | | | |

Für einen quantitativen Vergleich wurde die Verdünnung (10⁻¹ bis 10⁻⁴) gewählt, bei denen sich für beide Wirkstoffkonzentrationen (0 ppm und 50 ppm) sichtbare Koloniebildene Einheiten ergaben, die zählbar sind. Diese Verdünnung liegt bei 20°C und bei 26°C jeweils bei 10⁻⁴ und bei 30°C und bei 36°C bei jeweils 10⁻³.

Aus den entsprechenden Keimzahlen wurde angenähert abgeleitet, wie viele Keime pro wachsende Keime abgetötet wurden:

| | | |
|---|---|---|
| 36°C: | Reduktion von 20 000 auf 3 Keime | Normiert auf 10⁵: 10⁵ auf 15 |
| 30°C: | Reduktion von 20 000 auf 50 Keime | Normiert auf 10⁵: 10⁵ auf 250 |
| 26°C: | Reduktion von 1 800 auf 12 Keime | Normiert auf 10⁵: 10⁵ auf 700 |
| 20°C: | Reduktion von 1 000 auf 14 Keime | Normiert auf 10⁵: 10⁵ auf 1400 |

Das Beispiel zeigt dass die mikrobizide Wirkung von Dimethyldicarbonat auf Saccharomyces cerevisiae in dem Experiment zwischen 20°C und 36°C um etwa zwei Log-Stufen zunimmt. Insbesondere bei Temperaturen von 30°C und höher zeigt sich eine überraschende Wirkung.

### Beispiel 2

Ein Fruchtsaftgetränk mit ca. 20% Orangensaft, pH 3,6 wurde auf 20°C temperiert auf einer Abfüllanlage mit ca. 30 000 Flaschen pro Stunde in 450 ml PET Gebinde abgefüllt. Zur Abfüllung wurde 250 ppm Dimethyldicarbonat verwendet. Sofort nach Zugabe des Dimethyldicarbonat in den Getränkestrom mit einer handelsüblichen Dosiereinheit wurde das Getränk in den Füller geleitet und nach Befüllung die Gebinde auf einem Verschließer luftdicht verschlossen.

Auf diese Weise wurden 2000 Gebinde hergestellt. 1000 der Gebinde wurden daran anschließend sofort in einem Pasteurisationstunnel auf ca. 30 °C erwärmt (Durchlaufzeit ca. 10 min.).

Daran anschließend wurden die Gebinde mit einem Papieretikett versehen. Es bildete sich keine Kondensationsfeuchtigkeit auf den Flaschen. Auf der Oberfläche der Gebinde der nicht erwärmten Flaschen bildete sich dagegen Kondensationsfeuchtigkeit.

Danach wurden alle 2000 Gebinde in einem Lagerraum 3 Wochen bei ca. 18 °C Umgebungstemperatur gelagert.

Nach 3 Wochen wurden die 2x1000 Flaschen manuell begutachtet. Für die nicht temperierten Flaschen wurde 5 verkeimte Flaschen gezählt (Schimmel), während bei den auf 30°C temperierten Gebinden kein mikrobiologischer Befall gefunden wurde.

## Patentansprüche

1. Verfahren zur Herstellung von mikrobiell stabilisierten Getränken **dadurch gekenn-zeichnet, dass** man Dialkyldicarbonat dem Getränk bei einer Temperatur größer gleich 30°C, vorzugsweise größer 30°C, insbesondere bei 30,5 bis 40°C zugibt.

2. Verfahren gemäß Anspruch 1, **dadurch gekennzeichnet, dass** es sich bei dem Dialkyldicarbonat um eine Verbindung der Formel (I) handelt 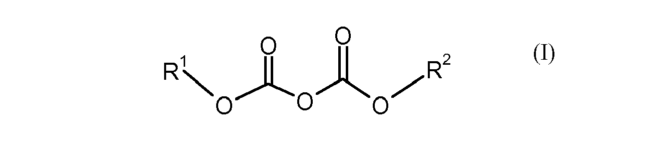 worin
R¹ und R² unabhängig voneinander für geradkettiges oder verzweigtes C₁-C₈-Alkyl, Cycloalkyl, C₂-C₈-Alkenyl, C₂-C₈-Alkinyl oder Benzyl stehen, welches jeweils gegebenenfalls ein- bis mehrfach, gleich oder verschieden substi- tuiert ist durch Halogen; Nitro; Cyano; C₁-C₆-Alkoxy; Dialkylamino; oder für Phe- nyl stehen, welches gegebenenfalls ein bis mehrfach, gleich oder verschieden sub- stituiert ist durch Halogen; Nitro; Cyano; Alkyl; Halogenalkyl; Alkoxy; Halo- genalkoxy; Acyl; Acyloxy; Alkoxycarbonyl; Carboxyl,
bevorzugt
R¹ und R² unabhängig voneinander für geradkettiges oder verzweigtes C₁-C₈-Alkyl, C₂-C₈-Alkenyl oder Benzyl stehen,
besonders bevorzugt
R¹ und R² unabhängig voneinander für geradkettiges oder verzweigtes C₁-C₅-Alkyl, C₃-Alkenyl oder Benzyl stehen,
und ganz besonders bevorzugt R¹ und R² unabhängig voneinander für Methyl, Ethyl, Isopropyl, tert.-Butyl, tert.-Amyl, Allyl oder Benzyl stehen.

3. Verfahren gemäß Anspruch 1, **dadurch gekennzeichnet, dass** es sich bei dem Dialkyldicarbonat um Dimethyldicarbonat handelt.

4. Verfahren gemäß Anspruch 1, **dadurch gekennzeichnet, dass** es sich bei den Getränken um Tee-basierte Getränke, einschließlich grünem Tee, schwarzem Tee sowie anderen Tee-Sorten, sowie um sauer eingestellte Getränke mit einem pH ≤ 4.2, karbonisierte und nicht-carbonisierte alkoholfreie Erfrischungsgetränke, Fruchtsäfte, Fruchtnektare, Fruchsaft-haltige Getränke, Weine, alkoholfreie Getränke, Ciders, Eistees, alkoholische Mischgetränke, aromatisierte Wässer oder Sportgetränke handelt.

5. Verfahren gemäß Anspruch 1, **dadurch gekennzeichnet, dass** das Dialkyldicarbonat in Gegenwart einer Phosphorverbindung zugegeben wird.

6. Verfahren gemäß Anspruch 1, **dadurch gekennzeichnet, dass** das Dialkyldicarbonat als Zusatz enthaltend mehr als 95 Gew.-% Dialkyldicarbonat, insbesondere mehr als 98 Gew.-%, dem Getränk zugegeben wird.

7. Verfahren gemäß Anspruch 1, **dadurch gekennzeichnet, dass** die Zugabe von Dialkyldicarbonat mittels einer Düse, insbesondere mit einem Druck von 0,1 bis 50bar, vorzugsweise von 0,5 bis 40bar gegenüber dem Getränkedruck erfolgt.

8. Verfahren gemäß Anspruch 1, **dadurch gekennzeichnet, dass** das Dialkyldicarbonat in einer Menge von 10 bis 250 ppm, bezogen auf das Getränk zugesetzt wird.

9. Verfahren zur Herstellung von mikrobiell stabilisierten Getränken, **dadurch gekennzeichnet, dass** man
a) bis 30 Minuten vor der Abfüllung des Getränkes in Getränkegebinde bei einer Temperatur von 0 bis 35°C Dialkyldicarbonat zum Getränk zugibt,
b) das nach a) erhaltene Getränk in ein Getränkegebinde abfüllt und
c) nach dem Verschließen des abgefüllten Getränkegebindes die Temperatur des gefüllten Getränkegebindes auf eine Temperatur von 20°C bis 40°C, mindestens jedoch um 3 °C gegenüber der Temperatur in Schritt a) erhöht.

10. Verfahren gemäß Anspruch 9, **dadurch gekennzeichnet, dass** als Dialkyldicarbonat das Dimethyldicarbonat eingesetzt wird.

11. Verfahren gemäß Anspruch 9, **dadurch gekennzeichnet, dass** Dimethyldicarbonat in einer Menge von 10-250 ppm zugegeben wird.
